# EUROPEAN PATENT APPLICATION

(11) **EP 2 924 534 A2**
(43) Date of publication of application: **30.09.2015**
(21) Application number: 15157190.8
(22) Date of filing: 02.03.2015
(51) Int. Cl.: G05G 1/10

(54) **Cooking appliance and light-emitting knob assembly thereof**

(30) Priority: 28.03.2014 CN 201420147252 U
(71) Applicant: BSH Hausgeräte GmbH, 81739 München (DE)
(72) Inventor: Kafali, Zeki, Nanjing- Jiangsu (CN); Li, Xingzhou, 210000 Nanjing City (CN); Wu, Jinhua, 210000 Nanjing (CN)

(57) **Abstract**

The present technical solution proposes a new improvement for a cooking appliance and a light-emitting knob assembly thereof. A light-emitting knob assembly for a cooking appliance proposed by the present technical solution includes: a knob and a light guide member, where the light guide member is fixed on the knob in an engaging manner after the knob is assembled. By using the present technical solution, the assembly efficiency can be improved.

## Description

The present technical solution relates to the field of cooking appliances and the field of light-emitting knob assemblies for cooking appliances.

A knob that has a light-emitting function and is used for an existing cooking appliance generally has a complicated assembly structure, thereby causing a low assembly efficiency. In addition, the knob that has the light-emitting function and is used for the existing cooking appliance also has a less diversified light guide structure and lacks an improvement in structure.

Unless supported by enough evidences, the prior art described herein does not mean that it is publicly known to persons of ordinary skill in the art to which the present invention relates before the filing date of the present application.

A primary objective of the present technical solution is to propose a new improvement for a cooking appliance and a light-emitting knob assembly thereof.

A light-emitting knob assembly for a cooking appliance proposed by the present technical solution includes: a knob and a light guide member, where the light guide member is fixed on the knob in an engaging manner after the knob is assembled. Herein, the "engaging manner" should be understood as any connection solution of implementing the connection and fixation by using elasticity of a connecting piece, which can be obviously conceived of and applied to the present technical solution by a person of ordinary skill in the art on the basis of this specification, the prior art and common general knowledge. By using the present technical solution, the assembly efficiency can be improved.

Optionally, the light guide member includes a translucent ring, and a side wall of the translucent ring is used as a translucent surface; and the translucent ring is located at the bottom of the knob, and the side wall of the translucent ring is smoothly connected to a side wall of the knob. The present technical solution proposes an entirely new structure of a light-emitting knob assembly for a cooking appliance, which not only helps to improve the assembly efficiency but also helps to improve an esthetic feeling of the appearance of the light-emitting knob assembly.

Optionally, the knob includes a rotating shaft receiving portion; the light guide member includes a translucent ring, and the translucent ring is provided with a hollow portion for the rotating shaft receiving portion to pass through; one end of the hollow portion is provided with a light receiving surface, and the other end is provided with a chamfer; and the chamfer is used for at least partially reflecting light entering from the light receiving surface. The chamfer is used for changing a transmission direction of light entering from the light receiving surface, which helps to implement diversified modeling of the light guide member.

Optionally, a side wall of the translucent ring is used as a translucent surface; the translucent ring is located at the bottom of the knob, and the side wall of the translucent ring is smoothly connected to a side wall of the knob; the hollow portion extends in a direction away from the chamfer to form a hollow cylinder portion, and the light receiving surface is disposed at a tip of the cylinder portion; and the chamfer is used for at least partially reflecting light entering from the light receiving surface towards the side wall of the translucent ring. The chamfer is used for changing a transmission direction of light entering from the light receiving surface, making it possible that the light receiving surface is disposed on the side wall of the translucent ring in a structure according to the present technical solution.

Optionally, the light guide member includes a translucent surface; and the translucent surface is a frosted surface. By using a frosted surface, the translucent surface can achieve an optimal light transmission effect.

Optionally, the light guide member includes a light shading surface; and the light shading surface is a smooth surface. The light shading surface is used for preventing light from getting out of the light guide member from the light shading surface or reducing the possibility. By using a smooth surface, the light shading surface can achieve an optimal light shading effect.

Optionally, the light guide member is integrally formed by using any one of the following materials:
polycarbonate,
acrylic, and
a mixed material of polycarbonate and a light diffusing agent. By using the materials, it can be ensured that the light guide member has an optimal light guide performance. Optionally, the knob includes a housing and a bearing frame fixed in the housing in an embedding manner; and the bearing frame is provided with an engaging member used for implementing engaging fixation.

Optionally, the light guide member includes a protruding portion; the volume of the protruding portion gradually dwindles in a direction away from a light source; and the bottom of the knob is provided with an opening for the protruding portion to pass through. Because the volume of the protruding portion gradually dwindles in the direction away from the light source, the protruding portion can achieve an optimal light guide effect. It should be noted herein that "the volume gradually dwindles" is broadly understood, that is, it may literally mean that the volume gradually dwindles, and it may also mean that the overall volume shows a trend of gradually dwindling.

Optionally, a top wall of the knob is provided with a through hole; and a tail end of the protruding portion is placed into the through hole to form a translucent point. It should be noted herein that after the tail end of the protruding portion is placed into the through hole, the translucent point is formed, and at the same time it helps to fix the light guide member.

Optionally, the light guide member includes a barb used for implementing the engaging fixation; and the knob is provided with a bearing portion for the barb to be put on.

Optionally, the barb is disposed on the protruding portion, which helps to simplify a structure.

Optionally, the protruding portion includes a translucent sheet; the side wall of the knob is provided with a notch; and the translucent sheet is placed into the notch. It should be noted herein that the translucent sheet is placed into the notch for light transmission, and it also helps to fix the light guide member at the same time.

The present technical solution further proposes a cooking appliance provided with the light-emitting knob assembly according to any item described above. By using the present technical solution, the assembly efficiency can be improved. Specifically, the cooking appliance may be a gas cooking appliance, an induction cooktop, a combined cooking appliance of a gas cooking appliance and an induction cooktop, or a cooking appliance of another type which can use the present technical solution, such as a resistance wire heating cooking appliance, an electrothermal film heating cooking appliance or a fuel cooking appliance.

Optionally, the cooking appliance includes a light source and a gas valve, and the gas valve includes a rotating shaft; and the light source is fixed on the gas valve in an engaging manner. Herein, the "engaging manner" should be understood as any connection solution of implementing the connection and fixation by using elasticity of a connecting piece, which can be obviously conceived of and applied to the present technical solution by a person of ordinary skill in the art on the basis of this specification, the prior art and common general knowledge, which helps to further improve the assembly efficiency.

It should be noted herein that the directional expression such as "bottom of the knob" in the present technical solution is described based on a common mounting state of the cooking appliance in the case of no special instruction.

The foregoing technical solution content of the present technical solution is not to describe all possible implementation manners of the present technical solution. In the entire application, many examples are given for providing a guide, and these examples can be used in various feasible combinations.

The following accompanying drawings only make exemplary descriptions and illustrations for the present technical solution, instead of limiting the scope of the present technical solution, and wherein:
- FIG. 1: is an exploded view of a local structure of a gas cooking appliance according to an embodiment of the present technical solution;
- FIG. 2: is a schematic structural diagram of a light-emitting knob assembly of a gas cooking appliance according to an embodiment of the present technical solution;
- FIG. 3: is an exploded view of the light-emitting knob assembly shown in FIG. 2;
- FIG. 4: is a schematic structural diagram of a light guide member of the light-emitting knob assembly shown in FIG. 2;
- FIG. 5: is another schematic structural diagram of a light guide member of the light-emitting knob assembly shown in FIG. 2;
- FIG. 6: is still another schematic structural diagram of a light guide member of the light-emitting knob assembly shown in FIG. 2;
- FIG. 7: is a cross-sectional view of a light guide member of the light-emitting knob assembly shown in FIG. 2;
- FIG. 8: is an assembly rendering of a gas valve and a light source of a gas cooking appliance according to an embodiment of the present technical solution;
- FIG. 9: is an exploded view of another local structure of a gas cooking appliance according to an embodiment of the present technical solution;
- FIG. 10: is a cross-sectional view of a local structure of a gas cooking appliance according to an embodiment of the present technical solution; and
- FIG. 11: is a cross-sectional view of another local structure of a gas cooking appliance according to an embodiment of the present technical solution.

In order to make the objectives, solutions, beneficial effects of the present technical solution clearer, the present technical solution is further described below by using preferred embodiments with reference to the accompanying drawings.

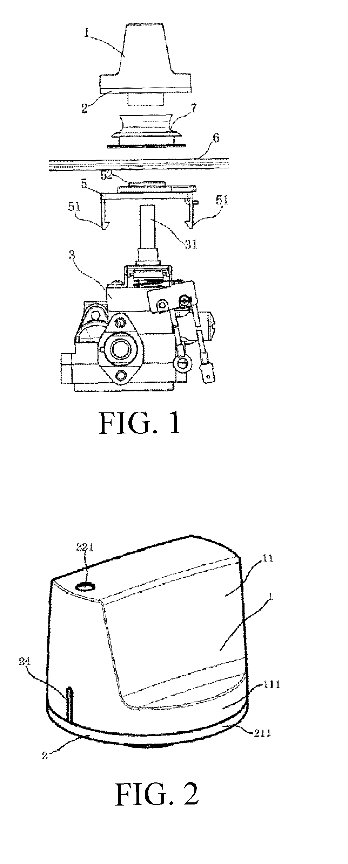

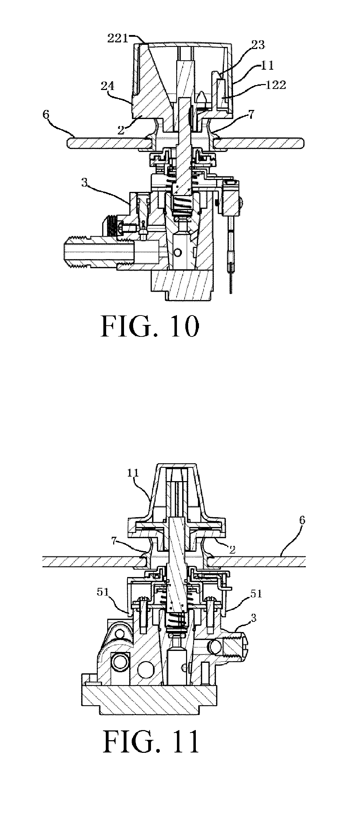

The present technical solution proposes an embodiment of a gas cooking appliance, and relevant structures of the gas cooking appliance are as shown in FIG. 1 to FIG. 11. The gas cooking appliance includes a light-emitting knob assembly, a light source 5, a panel 6, an elastic piece 4, a sealing ring 7 and a gas valve 3. The gas valve 3 includes a rotating shaft 31, and the rotating shaft 31 is used for controlling the gas valve 3. As shown in FIG. 10 and FIG. 11, the panel 6 is provided with a mounting hole, which is used for the rotating shaft 31 to pass through. The elastic piece 4 is used for enabling the rotating shaft 31 and the light-emitting knob assembly to be fixed together by extrusion. The sealing ring 7 is mounted at the mounting hole of the panel 6 to prevent a fluid dripping on the panel 6 from flowing to a place below the panel 6 through the mounting hole. It should be noted that the sealing ring 7 can also function to shade light to some extent.

The light-emitting knob assembly includes a knob 1 and a light guide member 2, which are fixed together in an engaging manner, as shown in FIG. 2. The knob 1 includes a housing 11 and a bearing frame 12 fixed in the housing 11 in an embedding manner. Specifically, the housing 11 and the bearing frame 12 are fixed together by means of fusion welding. A top wall of the housing 11 of the knob 1 is provided with a through hole 112, and a side wall 111 of the housing 11 of the knob 1 is provided with a notch. The bearing frame 12 includes a rotating shaft receiving portion 121, two openings 123 and bearing portions 122 separately disposed at the openings 123.

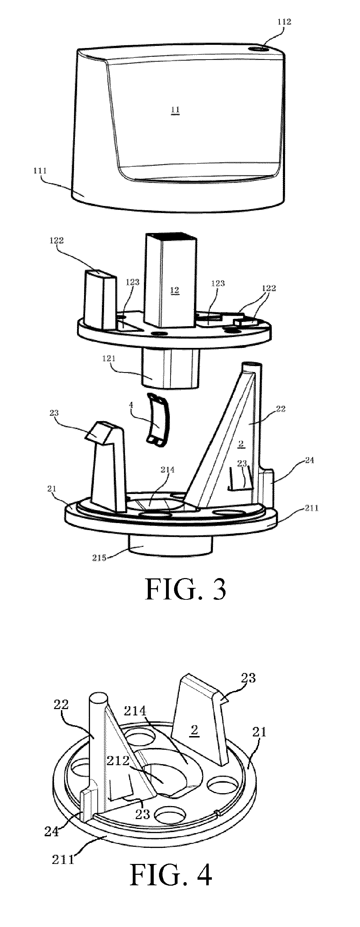

The light guide member 2 is fixed on the knob 1 in an engaging manner after the knob 1 is assembled (that is, after the housing 11 and the bearing frame 12 are fixed together). Specifically, the light guide member 2 is integrally formed by using a mixed material of polycarbonate (namely, PC) and a light diffusing agent. The light guide member 2 includes a translucent ring 21 and a protruding portion 22. A hollow portion 212 for the rotating shaft receiving portion 121 to pass through in an up-to-down manner is disposed in the middle of the translucent ring 21. The protruding portion 22 is disposed on the translucent ring 21, and the volume of the protruding portion 22 gradually dwindles in a direction away from the light source 5. The protruding portion 22 is further provided with a translucent sheet 24 and two barbs 23, as shown in FIG. 4 to FIG. 6. The translucent ring 21 is further provided with a separate barb 23, and the separate barb 23 and the protruding portion 22 are oppositely disposed and are spaced by the hollow portion 212. One of the openings 123 of the bearing frame 12 is used for the protruding portion 22 to pass through. When the two barbs 23 of the protruding portion 22 move to the opening 123, under the action of an external force, the two barbs 23 of the protruding portion 22 extrude an edge encircling the opening 123, so that elastic deformation occurs to the edge encircling the opening 123, and then the two barbs 23 of the protruding portion 22 pass through the opening 123. After the two barbs 23 pass through the opening 123, the edge encircling the opening 123 recovers from the deformation. At this time, the two barbs 23 of the protruding portion 22 are put on the bearing portion 122 at the opening 123, and the two barbs 23 of the protruding portion 22 are incapable of exiting from the opening 123 in the case of no external force. In fact, the assembly and fixation of the light guide member 2 and the knob 1 are completed at this time, as shown in FIG. 10 and FIG. 11. The other opening 123 of the bearing frame 12 is used for the separate barb 23 to pass through. Specifically, when the separate barb 23 moves to the opening 123, the separate barb 23 extrudes an edge encircling the opening 123, and under the action of an external force, elastic deformation occurs to the separate barb 23, so that the separate barb 23 passes through the opening 123 and is put on the bearing portion 122 at the opening 123. In addition, the separate barb 23 has recovered from the deformation at this time and the separate barb 23 is incapable of exiting from the opening 123 in the case of no external force. In fact, the assembly and fixation of the light guide member 2 and the knob 1 are completed at this time, as shown in FIG. 10 and FIG. 11. At this time, a tail end of the protruding portion 22 is placed into the through hole 112 of the housing 11 of the knob 1 to form a translucent point 221 for light transmission. As shown in FIG. 2 and FIG. 10, the translucent point 221 is a frosted surface. In addition, the translucent sheet 24 is placed into the notch at this time. As shown in FIG. 2 and FIG. 10, the translucent sheet 24 also is a frosted surface.

When the assembly and fixation of the light guide member 2 and the knob 1 are completed, the translucent ring 21 is located at the bottom of the knob 1, and a side wall 211 of the translucent ring 21 is smoothly connected to the side wall 111 of the knob 1, as shown in FIG. 2, FIG. 10 and FIG. 11. The side wall 211 of the translucent ring 21 is used as a translucent surface, and the translucent surface is a frosted surface. One end of the hollow portion 212 is provided with a light receiving surface 213, and the other end is provided with a chamfer 214. The chamfer 214 is used for partially reflecting light entering from the light receiving surface 213 towards the side wall 211 of the translucent ring 21.

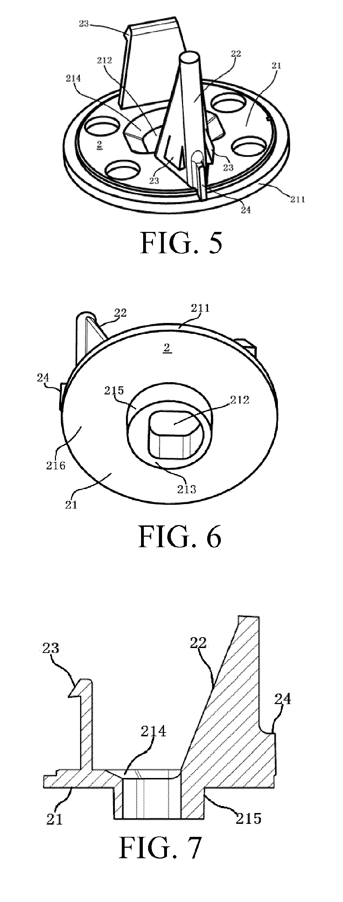

The hollow portion 212 extends in a direction away from the chamfer 214 to form a hollow cylinder portion 215, and the light receiving surface 213 is disposed at a tip of the cylinder portion 215, as shown in FIG. 6. In addition, an extension direction of the cylinder portion 215 is opposite to an extension direction of the protruding portion 22. A bottom wall of the translucent ring 21 is a light shading surface 216, as shown in FIG. 6, and the light shading surface 216 is a smooth surface.

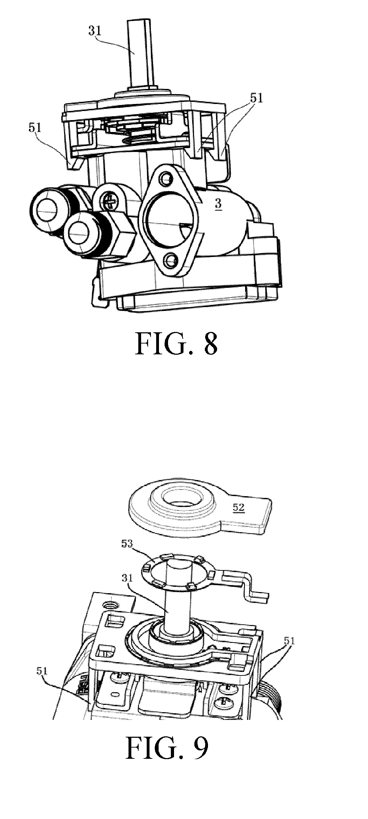

The light source 5 includes a hook 51, a lampshade 52, and an LED lamp 53, as shown in FIG. 1, FIG. 8, FIG. 9 and FIG. 11. The LED lamp 53 is disposed around the rotating shaft 31, and the LED lamp 53 is provided with the lampshade 52 to protect the LED lamp 53, where the lampshade 52 is also disposed around the rotating shaft 31. A projecting direction of light emitted from the LED lamp 53 is parallel with an axis of the rotating shaft 31; therefore, the light emitted from the LED lamp 53 perpendicularly enters the light receiving surface 213. The light source 5 is fixed on the gas valve 3 in an engaging manner by using the hook 51. Specifically, in an engaging process, deformation occurs to the hook 51 under the action of an external force, so that the light source 5 is fixed on the gas valve 3 in an engaging manner (an engaging principle is the same as a principle of engaging fixation between the light guide member 2 and the knob 1). As shown in FIG. 8, FIG. 9 and FIG. 11, the hook 51 recovers from the deformation at this time, and the hook 51 cannot be detached from the gas valve 3 if no external force is exerted.

The above is merely a preferred embodiment of the present technical solution, and other embodiments may be obtained by performing additions, deletions, modifications, or replacements on some technical features. For example, the light guide member may also be integrally formed by using another light-conductive material such as polycarbonate (namely, PC) or acrylic. For another example, another available engaging fixation structure may also be used to implement the engaging fixation. For still another example, with regard to two members for cooperating to implement the engaging fixation, if the engaging fixation is implemented by elastic deformation of one of the members, it is feasible to reverse their roles and implement the engaging fixation by making elastic deformation occur to the other one; and in addition, it is also feasible to implement the engaging fixation by making elastic deformation occur to both members for cooperating to implement the engaging fixation.

It should be additionally noted that, it should be understood that the present technical solution covers all possible implementations determined by the claims of the present technical solution in combination with the disclosure of the specification, instead of being limited to the embodiment described above. Therefore, any simple modification, equivalent change, and modification made according to the technical essence of the present technical solution without departing from the content of the present technical solution shall fall within the protection scope of the present technical solution. It should be particularly noted that any inferior application on the basis of the present technical solution also belongs to the protection scope of the present technical solution.

### Reference numerals:

- 1.: knob;
- 11.: housing;
- 111.: side wall of the knob;
- 112.: through hole;
- 12.: bearing frame;
- 121.: rotating shaft receiving portion;
- 122.: bearing portion;
- 123.: opening;
- 2.: light guide member;
- 21.: translucent ring;
- 211.: side wall of the translucent ring;
- 212.: hollow portion;
- 213.: light receiving surface;
- 214.: chamfer;
- 215.: cylinder portion;
- 216.: light shading surface;
- 22.: protruding portion;
- 221.: translucent point;
- 23.: barb;
- 24.: translucent sheet;
- 3.: gas valve;
- 31.: rotating shaft
- 4.: elastic piece;
- 5.: light source;
- 51.: hook;
- 52.: lampshade;
- 53.: LED lamp;
- 6.: panel;
- 7.: sealing ring

## Claims

1. A light-emitting knob assembly for a cooking appliance, **characterized by**:
comprising a knob (1) and a light guide member (2), wherein
the light guide member (2) is fixed on the knob (1) in an engaging manner after the knob (1) is assembled.

2. The light-emitting knob assembly according to claim 1, **characterized in that**:
the light guide member (2) comprises a translucent ring (21), and a side wall (211) of the translucent ring (21) is used as a translucent surface; and the translucent ring (21) is located at the bottom of the knob (1), and the side wall (211) of the translucent ring (21) is smoothly connected to a side wall (111) of the knob (1).

3. The light-emitting knob assembly according to claim 1, **characterized in that**:
the knob (1) comprises a rotating shaft receiving portion (121);
the light guide member (2) comprises a translucent ring (21), and the translucent ring (21) is provided with a hollow portion (212) for the rotating shaft receiving portion (121) to pass through; one end of the hollow portion (212) is provided with a light receiving surface (213), and the other end is provided with a chamfer (214);
and the chamfer (214) is used for at least partially reflecting light entering from the light receiving surface (213).

4. The light-emitting knob assembly according to claim 3, **characterized in that**:
a side wall (211) of the translucent ring (21) is used as a translucent surface;
the translucent ring (21) is located at the bottom of the knob (1), and the side wall (211) of the translucent ring (21) is smoothly connected to a side wall (111) of the knob (1);
the hollow portion (212) extends in a direction away from the chamfer (214) to form a hollow cylinder portion (215), and the light receiving surface (213) is disposed at a tip of the cylinder portion (215); and
the chamfer (214) is used for at least partially reflecting light entering from the light receiving surface (213) towards the side wall (211) of the translucent ring (21).

5. The light-emitting knob assembly according to claim 1, **characterized in that**:
the light guide member (2) comprises a translucent surface; and
the translucent surface is a frosted surface.

6. The light-emitting knob assembly according to claim 1, **characterized in that**:
the light guide member (2) comprises a light shading surface (216); and
the light shading surface (216) is a smooth surface.

7. The light-emitting knob assembly according to claim 1, **characterized in that**:
the light guide member (2) is integrally formed by using any one of the following materials:
polycarbonate,
acrylic, and
a mixed material of polycarbonate and a light diffusing agent.

8. The light-emitting knob assembly according to claim 1, **characterized in that**:
the knob (1) comprises a housing (11) and a bearing frame (12) fixed in the housing (11) in an embedding manner; and
the bearing frame (12) is provided with an engaging member used for implementing engaging fixation.

9. The light-emitting knob assembly according to any one of the forgoing claims, **characterized in that**:
the light guide member (2) comprises a protruding portion (22);
the volume of the protruding portion (22) gradually dwindles in a direction away from a light source (5); and
the bottom of the knob (1) is provided with an opening (123) for the protruding portion (22) to pass through.

10. The light-emitting knob assembly according to claim 9, **characterized in that**:
a top wall of the knob (1) is provided with a through hole (112); and
a tail end of the protruding portion (22) is placed into the through hole (112) to form a translucent point (221).

11. The light-emitting knob assembly according to claim 9, **characterized in that**:
the light guide member (2) comprises a barb (23) used for implementing the engaging fixation; and
the knob (1) is provided with a bearing portion (122) for the barb (23) to be put on.

12. The light-emitting knob assembly according to claim 11, **characterized in that**:
the barb (23) is disposed on the protruding portion (22).

13. The light-emitting knob assembly according to claim 9, **characterized in that**:
the protruding portion (22) comprises a translucent sheet (24);
the side wall (111) of the knob (1) is provided with a notch; and
the translucent sheet (24) is placed into the notch.

14. A cooking appliance, **characterized in that** the cooking appliance is provided with the light-emitting knob assembly according to any one of the forgoing claims.

15. The cooking appliance according to claim 14, **characterized in that**:
the cooking appliance comprises a light source (5) and a gas valve (3), and the gas valve (3) comprises a rotating shaft (31); and
the light source (5) is fixed on the gas valve (3) in an engaging manner.
